# EUROPÄISCHE PATENTSCHRIFT

(11) **EP 2 495 467 B1**
(45) Veröffentlichungstag und Bekanntmachung des Hinweises auf die Patenterteilung: **24.12.2014**
(21) Anmeldenummer: 12155862.1
(22) Anmeldetag: 17.02.2012
(51) Int. Cl.: F16J 15/00, F16J 15/16, F16J 15/32

(54) **Dichtungssystem**
Sealing system
Système d'étanchéification

(30) Priorität: 01.03.2011 DE 102011004901; 01.03.2011 DE 202011003372 U
(43) Veröffentlichungstag der Anmeldung: 05.09.2012
(73) Patentinhaber: SAF-HOLLAND GmbH, 63856 Bessenbach (DE)
(72) Erfinder: Christ, Armin, 63856 Bessenbach (DE); Drewes, Olaf, 63743 Aschaffenburg (DE)
(74) Vertreter: Müller Schupfner & Partner Patent- und Rechtsanwaltspartnerschaft mbB

(56) Entgegenhaltungen:
- EP-A1- 0 731 301
- EP-A1- 0 775 812
- DE-A1- 10 353 305
- DE-A1-102009 039 279
- US-A1- 2010 254 643

## Beschreibung

Die vorliegende Erfindung betrifft ein Dichtungssystem gemäß dem Oberbegriff des Anspruchs 1, insbesondere zur Anwendung bei Radlageranordnungen von Nutzfahrzeugen.

Derartige Dichtungssysteme sind aus dem Stand der Technik bekannt, z. B. als Lagerdichtungen in denen Wälzlager gegen heraustretende Lagerschmierstoffe abgedichtet werden. Es werden dabei Dichtringe verwendet, die bei Temperaturanstieg im Lager und Ausdehnung der Lagerschmierstoffe verhindern, dass diese aus dem Lager herausgelangen können oder das Entweichen der Lagerschmierstoffe zumindest stark einschränken. Es besteht aber bei derartigen Lagerdichtungen das Problem, dass wenn außerhalb des Lagers ein höherer Druck anliegt, Stoffe, wie z. B. Schmutz, in den Lagerbereich gelangen können. Dies kann besonders dann der Fall sein, wenn an das Lager angrenzend ein hydraulisch betriebener Zusatzantrieb verwendet wird und an diesem eine Leckage von Hydraulikflüssigkeit auftritt. Diese Leckageflüssigkeit kann, bei hohem Druck im Hydraulikantrieb, in den Lagerbereich gelangen und dort große Schäden hervorrufen.

Die EP 0 731 301 A1, dass die Merkmale des Oberbegriffs des Anspruch 1 zeigt, betrifft die Abdichtung eines Automatikgetriebes eines Fahrzeugs mit einer Dichtung, welche den Spalt zwischen einer Welle und einem Gehäuse abdichtet.

Es ist also Aufgabe der vorliegenden Erfindung ein Dichtungssystem bereitzustellen, welches gewährleistet, dass der Lagerbereich einer Radlageranordnung nicht nur gegen Entweichen von Schmierstoffen aus dem Lager gesichert ist, sondern darüber hinaus auch gegen das Eintreten von Fremdstoffen. Diese Aufgabe wird gelöst mit einem Dichtungssystem mit den Merkmalen des Anspruchs 1. Bevorzugte Ausführungsformen ergeben sich aus den abhängigen Ansprüchen.

Erfindungsgemäß umfasst das Dichtungssystem eine Rotoreinheit und eine Statoreinheit, die in einem Lagerbereich drehbar zueinander gelagert sind, wobei die Rotoreinheit eine Nabe und die Statoreinheit eine Achse aufweist, wobei an die Rotoreinheit und die Statoreinheit eine Leckagequelle grenzt, wobei zwischen Leckagequelle und Rotor- und/oder Statoreinheit ein Druckraum vorgesehen ist und wobei der Druckraum in Richtung des Lagerbereiches mittels einer Hochdruckdichtung abgedichtet ist. Kennzeichnend hierbei ist, dass die Rotoreinheit und die Statoreinheit drehbar zueinander gelagert sind. Dabei bedeutet die Namensgebung Rotor- bzw. Statoreinheit nicht unmittelbar, dass die Rotoreinheit der drehbare und die Statoreinheit der feststehende Teil ist, sondern es kann alternativ an dieser Stelle auch bevorzugt eine Funktionsumkehr vorgesehen sein, so dass die Statoreinheit drehbar gelagert ist und die Rotoreinheit mit z. B. einem Fahrzeugrahmen fest in Verbindung steht. Weiterhin grenzt an die Rotor- bzw. Statoreinheit eine Leckagequelle, also ein Bauteil oder eine Baugruppe aus welcher eine Leckage, zumeist eine Leckageflüssigkeit austritt. Diese Leckageflüssigkeit wird in dem dafür vorgesehenen Druckraum, welcher sich zwischen Leckagequelle, Rotor- und Statoreinheit befindet aufgenommen. Da es, zumeist aus Gründen des Umweltschutzes, nicht erwünscht ist, dass die Leckageflüssigkeit in die Umwelt abgegeben wird, ist der Druckraum als nach außen hin abgeschlossen ausgelegt. Der Lagerbereich ist der Bereich, in welchem die Lagerung von Rotoreinheit und Statoreinheit drehbar zueinander ausgeführt ist. Da derartige Lagerungen z. B. mittels eines Wälz- oder eines Gleitlagers einer ausreichenden Schmierung bedürfen, ist dieser Lagerbereich nach außen abgedichtet, so dass das verwendete Schmiermittel, z. B. Schmierfett oder Öl, nicht entweichen kann. Gleichzeitig dürfen in den Lagerbereich kein Schmutz oder ähnliche Fremdstoffe von außen eindringen. Aufgrund der Tatsache, dass die Rotor- und die Statoreinheit drehbar zueinander gelagert sind und nicht fest miteinander in Verbindung stehen, ergibt sich ein Spalt zwischen Rotor- und Statoreinheit, der als Verbindungskanal von Druckraum über diverse Zwischenräume bis hin zum Lagerbereich fungiert. Über diesen Spalt oder Kanal kann die aus der Leckagequelle entweichende Leckageflüssigkeit bis hin zum Lagerbereich gelangen und es muss entsprechend eine Abdichtung vorgesehen sein. Zu diesem Zweck ist zwischen Druckraum und Lagerbereich eine Hochdruckdichtung vorgesehen, welche den Druckraum in Richtung des Lagerbereichs, also den Spalt, der zwischen Druckraum und Lagerbereich vorhanden ist, in Richtung des Lagerbereiches abdichtet. Abdichten bedeutet, dass zunächst die Leckageflüssigkeit nicht vom Druckraum an der Hochdruckdichtung vorbei in Richtung des Lagerbereiches fließen kann. Da diese Dichtheit abhängig vom Druck p₁ vor der Hochdruckdichtung, bzw. im Druckraum, und dem Gegendruck p₂ auf der zum Lagerbereich hingewandten Seite der Hochdruckdichtung, nicht absolut möglich ist, besteht eine sekundäre Aufgabe der Hochdruckdichtung darin, ein ausreichend großes Druckverhältnis p₁ zu p₂ herzustellen. Dieses von der Hochdruckdichtung hergestellte Druckverhältnis kann dann als ausreichend groß angenommen werden, wenn eine tolerierbar kleine Menge an Leckageflüssigkeit an der Hochdruckdichtung vorbei gelangen kann und gleichzeitig der Druck hinter der Hochdruckdichtung, also vom Druckraum aus gesehen hinter der Hochdruckdichtung, so gering ist, dass eventuell weitere Dichtungen verhindern können, dass Leckageflüssigkeit in den Lagerbereich gelangt. In anderen Worten, besteht eine bevorzugte Aufgabe der Hochdruckdichtung darin, einen Druckverlust zu erzeugen, der so groß ist, dass eine Leckageströmung ganz unterbunden oder zumindest erheblich gestört wird. Bevorzugt ist die Hochdruckdichtung ein Dichtring mit profilartigem Querschnitt aus einem elastischen Material, wie beispielsweise FKM, NBR oder PTFE. Um die Stabilität des Dichtringes zu erhöhen und eine größere Anpressung an die Flächen, an denen er anliegt, zu erreichen, kann der Dichtring bevorzugt über eine Armierung, z. B. in Form eines einen metallischen Drahtes, verfügen.

Erfindungsgemäß ist der Lagerbereich gegen den Druckraum durch eine Lagerdichtung abgedichtet, wobei zwischen Hochdruckdichtung und Lagerdichtung ein Sekundärraum eingeschlossen ist. Diese Lagerdichtung verhindert sowohl das Eintreten von Fremdflüssigkeit oder Fremdstoffen in den Lagerbereich als auch das Heraustreten der Lagerschmierstoffe aus dem Lager. Aufgrund dieser zweiseitigen Funktionsweise der Lagerdichtung ist in der Hauptströmungsrichtung, d. h. der Strömungsrichtung der Leckageflüssigkeit vom Druckraum hin zum Lagerbereich, eine weniger gute Abdichtung durch die Lagerdichtung im Vergleich zur Hochdruckdichtung gegeben. Bevorzugt wird daher der Druck im Sekundärraum geringer gehalten als im Druckraum. Darüber hinaus wird gewährleistet, dass das Druckverhältnis über die Lagerdichtung p₂ zu p₃ geringer ist als das Druckverhältnis über die Hochdruckdichtung p₁ zu p₂, mit p₁ dem Druck im Druckraum, p₂ dem Druck im Sekundärraum und p₃ dem Druck im Lagerbereich. Der Sekundärraum erfüllt wie auch der Druckraum die Funktion, Leckageflüssigkeit zu speichern, wobei die Menge der zu speichernden Leckageflüssigkeit bevorzugt an die Betriebsbedingungen der Leckagequelle angepasst ist. Besonders bevorzugt sollen der Druckraum und der Sekundärraum so dimensioniert sein, dass sie eine bestimmte Menge an Leckageflüssigkeit aufnehmen können bevor die Gefahr besteht, dass Leckageflüssigkeit in das Lager eintritt oder im Druck- und Sekundärraum unter so hohem Druck steht, dass sie nach außen in die Umwelt gelangen kann. In weiteren bevorzugten Ausführungsformen können mehrere Hochdruckdichtungen hintereinander geschaltet und zwischen diesen zusätzliche Sekundärräume vorgesehen sein. Vorteilhaft ist dies beispielsweise, wenn eine höhere Sicherheit und Redundanz vom Dichtungssystem gefordert wird oder eine prinzipielle Überdimensionierung des Dichtungssystems vorgesehen ist.

In einer weiteren bevorzugten Ausführungsform ist die Hochdruckdichtung gesichert gegen Verlagerung relativ zur Rotoreinheit und spielfrei an der Statoreinheit angeordnet. Dies bedeutet bevorzugt, dass die Hochdruckdichtung an ihrer Außenseite, also der Seite mit dem größeren Umfang gesichert gegen Verlagerung an der Rotoreinheit befestigt ist und mit ihrer Innenseite, der Seite mit geringerem Umfang spielfrei an der Statoreinheit schleift. Aufgrund der an der Innenseite geringeren Weglänge, also dem Umfang der Innenfläche, wird so der Widerstand durch Reibung gering gehalten, da die für die Reibung die effektive Berührungslänge kürzer ist als an der Außenseite der Hochdruckdichtung. Die Anbringung an der Rotoreinheit kann dabei bevorzugt so vorgenommen werden, dass die Hochdruckdichtung an z. B. einem Vorsprung oder Absatz angelagert ist, so dass sie bei erhöhtem Druck nach Auftreten einer Leckage nicht in Richtung des Lagerbereiches verschoben werden kann. Bevorzugt ist an der Rotoreinheit eine Stufe bzw. eine Nut vorgesehen, an der die Hochdruckdichtung, gegen Verschiebung gesichert, gelagert werden kann. Es kann auch bevorzugt sein, die Hochdruckdichtung mittels eines Spannringes oder einer Klebverbindung zu fixieren. Um die Reibung der Hochdruckdichtung an der Statoreinheit weiter zu minimieren, kann z. B. bevorzugt eine bestimmte Beschichtung auf der Innenseite der Hochdruckdichtung vorgesehen sein, welche leichteres Gleiten an der Statoreinheit ermöglicht. Weiterhin wird die Geometrie an der Innenseite so gewählt, dass z. B. eine Lippe gebildet ist, welche mit möglichst geringer Berührungsfläche und daher geringerem Widerstand auf der Statoreinheit gleiten kann.

In einer besonders bevorzugten Ausführungsform ist die Hochdruckdichtung derart ausgebildet, dass sie im unbelasteten Zustand einen geringeren Anpressdruck auf die, sich relativ zu ihr bewegende Statoreinheit ausübt, als im belasteten Zustand. Der belastete Zustand wird an dieser Stelle als der Zustand mit vorliegender Leckage und ansteigendem Druck im Druckraum definiert. Der unbelastete Zustand ist der Zustand, bei dem keine Leckage vorliegt und auch keine Notwendigkeit der Abdichtung durch die Hochdruckdichtung besteht. Im unbelasteten Zustand, ist es von Vorteil, wenn die Hochdruckdichtung nicht, oder zumindest nicht mit großer Kraft, auf die Statoreinheit einwirkt. Auf diese Weise kann der Reibungswiderstand im unbelasteten Zustand vermindert werden. Tritt im weiteren Verlauf eine Leckage auf, so soll, wenn der Druck im Druckraum ansteigt, die Hochdruckdichtung durch dessen Druckkraft so verformt werden, dass sie mit einer größeren Anpresskraft auf die Statoreinheit gepresst wird und auf diese Weise eine höhere Dichtheit erreicht wird. Bevorzugt wird die Hochdruckdichtung zu diesem Zweck aus elastischem Material hergestellt und eine Querschnittsgeometrie gewählt, bei welcher eine, möglichst groß gehaltene, von der Achse wegweisende Fläche vorgesehen ist, auf welche der Druck im Druckraum einwirkt und welche eine möglichst große Flächenlast auf den Teil der Hochdruckdichtung, der auf der Statoreinheit aufliegt, überträgt. Bevorzugt ist der Anpressdruck der Hochdruckdichtung auf die Statoreinheit proportional zum Druck im Druckraum bzw. im Sekundärraum, so dass bei steigendem Druck im Druck- bzw. Sekundärraum der Anpressdruck der Hochdruckdichtung auf die Statoreinheit steigt und somit auch die Dichtheit der Hochdruckdichtung.

In einer bevorzugten Ausführungsform erzeugen Hochdruckdichtung und Lagerdichtung ein kaskadisches Druckgefälle, so dass der Druck p₁ im Druckraum größer ist als der Druck p₂ im Sekundärraum und dieser wiederum größer ist als der Druck p₃ im Lagerbereich, wobei das Druckgefälle über die Hochdruckdichtung Δp_{HD} = p₁ - p₂ groß genug ist, damit das Druckgefälle über die Lagerdichtung dem Grenzwert für deren Dichtheit Δp_{LD} = p₂ - p₃ nicht überschreitet. Es soll also bevorzugt mittels einer oder einer Vielzahl von Hochdruckdichtungen bzw. Lagerdichtungen eine gestufte Druckverteilung, von hohem Druck an der Leckagequelle bis hin zu möglichst niedrigem Druck vor der Lagerdichtung, erzeugt werden. Es können auf diese Weise ausgehend vom Grenzdruckverhältnis, bis zu welchem die Lagerdichtung gerade noch ausreichend dicht ist, die stromaufwärts liegenden Hochdruckdichtungen dimensioniert werden. Mit anderen Worten: Das von der Lagerdichtung vorgegebene Grenzdruckverhältnis definiert gemeinsam mit dem Druck im Lagerbereich p₃ die Auslegung der nötigen Dichtheiten an den stromauf liegenden Hochdruckdichtungen. Es können auf diese Weise bei der Planung des Dichtungssystems auf einfache Weise eine Überdimensionierung und Sicherheitsfaktoren vorgesehen werden und das Dichtungssystem auch für Anwendungen mit besonders strengen sicherheits- oder umwelttechnischen Anforderungen ausgelegt werden.

In einer bevorzugten Ausführungsform ist die Leckagequelle ein sowohl mit der Rotoreinheit als auch mit der Statoreinheit verbundener hydrostatischer Antrieb und die Leckageflüssigkeit ein, aus diesem austretendes, Hydrauliköl. Ein solcher hydrostatischer Antrieb wird von außen an die Radaufhängung eines Nutzfahrzeuges angeflanscht und liefert dem jeweiligen Rad zusätzlichen Antrieb. Der hydrostatische Antrieb wird zumeist mit Drücken betrieben, die deutlich über den Drücken liegen, welche z. B. in Radlageranordnungen vorliegen, so dass wenn eine Leckage auftritt, ein äußerst ausgeklügeltes Dichtungssystem vorgesehen sein muss, um das Übertreten von Hydrauliköl in die restlichen Fahrzeug- und Radlagerteile zu verhindern. Bevorzugt umfasst ein solcher hydrostatischer Antrieb einen Teil, welcher fest mit der Nabe verbunden ist und einen weiteren Teil, der fest mit der Achse verbunden ist, wobei der hydrostatische Antrieb ein Drehmoment zwischen diesen beiden Teilen aufbringt und an Achse und Nabe überträgt. Aufgrund dieser zwei zueinander beweglichen Teile des hydrostatischen Antriebes ist das Risiko, dass zwischen diesen Teilen eine Dichtung versagt und Leckageflüssigkeit austreten kann, relativ groß. Um zu verhindern, dass aus dem hydrostatischen Radantrieb austretende Leckageflüssigkeit die gesamte Radlageranordnung verlässt und in die Umwelt abgegeben wird, ist der hydrostatische Antrieb bevorzugt mit einer statischen Dichtung, d. h. einer Dichtung zwischen zwei sich nicht relativ zueinander bewegenden Teilen, mit der Radlageranordnung verbunden. In weiteren Ausführungsmöglichkeiten kann die Leckagequelle auch z. B. ein hydraulisch betriebenes Bremssystem sein, welches in abgedichteter Ausführung mit der Radlageranordnung verbunden ist und somit ebenfalls die eventuell auftretende Leckageflüssigkeit gegen Eintreten in den Lagerbereich abgesichert werden muss.

In einer besonders bevorzugten Ausführungsform ist an der Nabe und/oder der Achse ein Adapterelement vorgesehen, an welchem die Hochdruckdichtung angelagert ist, wobei die Abmessung des Adapterelements derart festgelegt sind, dass die Dichtungen unabhängig von der Geometrie der Achse und der Nabe auswählbar sind und wobei das Adapterelement an der Nabe und/oder der Achse mittels einer form-, stoff- und/oder kraftschlüssigen Verbindung angelagert ist. Solche Adapterelemente können bevorzugt auf Welle aufschiebbare und in die Nabe einsetzbare Scheibenringe, Hülsen oder ähnliche bevorzugt rotationssymmetrische Bauteile sein. Sie können als z. B. Abstandshalter ausgeführt sein und sollen bei der vorliegenden Erfindung bevorzugt den Einsatz von Standarddichtelementen ermöglichen, indem die Geometrien, an denen diese Standarddichtelemente angelegt werden, unabhängig von der Geometrie der Achse und der Nabe gemacht werden. Bevorzugt sind am Adapterelement weitere Ausformungen vorgesehen, welche möglich machen, dass die Dichtungen formschlüssig oder kraftschlüssig in das Adapterelement eingesetzt werden können. Besonders bevorzugt verfügen Adapterelemente, welche sich relativ zur Hochdruckdichtung oder Lagerdichtung bewegen, an den Kontaktflächen zu diesen Dichtungen über besonders vorteilhaft ausgeführte Oberflächengeometrien bzw. Oberflächenbeschaffenheiten, z. B. besonders glatte Oberflächen, so dass auf diese Weise die Reibung zwischen Dichtelement und Adapterelement deutlich verringert werden kann.

In einer weiteren bevorzugten Ausführungsform weist die Rotoreinheit einen Überdruckauslass auf, welcher vorzugsweise ein Überdruckventil umfasst. Dieser Überdruckauslass ermöglicht eine weitere Steigerung der Sicherheit des erfindungsgemäßen Dichtungssystem, da die in Druckraum und/oder Sekundärraum vorliegenden Drücke so gegen das Überschreiten festgelegter Grenzwerte gesichert werden können. Ist der Druck im Druckraum und/oder Sekundärraum so weit angestiegen, dass ein sicherer Betrieb der Hochdruck- und/oder Lagerdichtung nicht mehr gewährleistet ist, so kann die Leckageflüssigkeit über den Überdruckauslass nach außen abgegeben werden. Das Überdruckventil ermöglicht es den Druck, ab welchem die Leckageflüssigkeit durch den Überdruckauslass entweichen kann, einzustellen, wobei bevorzugt ein Druck am Überdruckventil eingestellt wird, welcher an die, dem Überdruckauslass stromab folgende Dichtung angepasst ist. Es kann bevorzugt sein, dass durch den Überdruckauslass entweichende Leckageflüssigkeit nicht in die Umwelt abgegeben wird, sondern in einem weiteren Sekundär- bzw. Druckraum aufgefangen wird.

In einer besonders bevorzugten Ausführungsform grenzt der Überdruckauslass an den Druckraum und/oder an dem Sekundärraum. Es ist bevorzugt, einen oder eine Vielzahl von Überdruckauslässen derart in die Rotoreinheit einzubringen, dass die Sicherheit und Einstellbarkeit des Dichtungssystems gesteigert wird. Bevorzugt, um das Material der Rotoreinheit, bzw. der Nabe, nicht zu stark durch eingebrachte Bohrungen zu schwächen, kann nur ein Überdruckauslass, an den Druckraum grenzend, vorgesehen sein. Das in diesem Überdruckauslass vorgesehene Überdruckventil ist bevorzugt so eingestellt, dass, bei bekanntem Grenzdruckverhältnis der Hochdruckdichtung, es sich bei Überschreiten eines Druckes im Druckraum, der ein Überschreiten des maximal zulässigen Druckes vor der Lagerdichtung zur Folge hat, öffnet und die Leckageflüssigkeit aus dem Druckraum entweichen kann, die Hochdruckdichtung wieder dicht schließt und der Druck im Sekundärraum nicht weiter ansteigt.

In einer bevorzugten Ausführungsform öffnet sich das Überdruckventil bei einem Grenzdruck, welcher dem maximal erlaubten Betriebsdruck der stromab folgenden Dichtung angepasst ist. Dies bedeutet bevorzugt, dass Dichtungselemente mit bekanntem Betriebsverhalten verwendet werden, wobei besonders das maximale vom Dichtungselement aufrecht erhaltene Druckgefälle, von vor dem Dichtungselement bis hinter das Dichtungselement, bekannt sein muss. Dieses maximal mögliche Druckgefälle ist u. a. abhängig vom Fluid, gegen welches abgedichtet werden soll, den Betriebstemperaturen und von der Geometrie und Oberflächenbeschaffenheit der Flächen an Rotor- und Statoreinheit, an welche das Dichtungselement angelagert wird. Bevorzugt kann auf diese Weise bereits beim Einbau des Überdruckventils, der richtige Druckwert, ab dem dieses schaltet, eingestellt werden und es sind keine aufwendigen Tests des Dichtungssystems nötig.

Es ist von Vorteil, wenn der Druckraum, der Sekundärraum und/oder der Überdruckauslass mit einer Vorrichtung verbunden ist, welche austretende Leckageflüssigkeit von der Außenseite der Rotoreinheit her sichtbar macht. Bevorzugt wird hierzu ein, auf chemischer Reaktion der Leckageflüssigkeit mit einem entsprechenden Indikatorelement basierendes, Material verwendet, welches sich beispielsweise an den Ausgängen des Überdruckauslasses befindet. Weiterhin kann bevorzugt ein Röhrchen aus transparentem Material vorgesehen sein, in welchem sich Leckageflüssigkeit sammelt und von außen sichtbar wird. Diese Vorrichtung dient in erster Linie dazu, eine Leckage an der Radlageranordnung rechtzeitig zu signalisieren, damit eine Reparatur vorgenommen werden kann, bevor der Lagerbereich beschädigt wird oder größere Mengen an Leckageflüssigkeit in die Umwelt gelangen.

Weitere Vorteile und Merkmale ergeben sich aus der nachfolgenden beispielhaften Beschreibung einer bevorzugten Ausführungsform des erfindungsgemäßen Dichtungssystems mit Bezug auf die beigefügten Figuren. Unterschiedliche Merkmale verschiedener Ausführungsbeispiele können im Rahmen der Erfindung miteinander kombiniert werden. Es zeigen:
- Fig. 1: eine Schnittansicht einer ersten bevorzugten Ausführungsform des erfindungsgemäßen Dichtungssystems,
- Fig. 2: eine erste Schnittansicht einer bevorzugten Ausführungsform der erfindungsgemäßen Hochdruckdichtung,
- Fig. 3: eine Schnittansicht einer weiteren bevorzugten Ausführungsform der erfindungsgemäßen Hochdruckdichtung,
- Fig. 4: eine Schnittansicht einer bevorzugten Ausführungsform der erfindungsgemäßen Hochdruckdichtung mit Adapterelement und
- Fig. 5: eine weitere Schnittansicht einer bevorzugten Ausführungsform der erfindungsgemäßen Hochdruckdichtung mit Adapterelement sowohl an der Nabe als auch an der Achse.

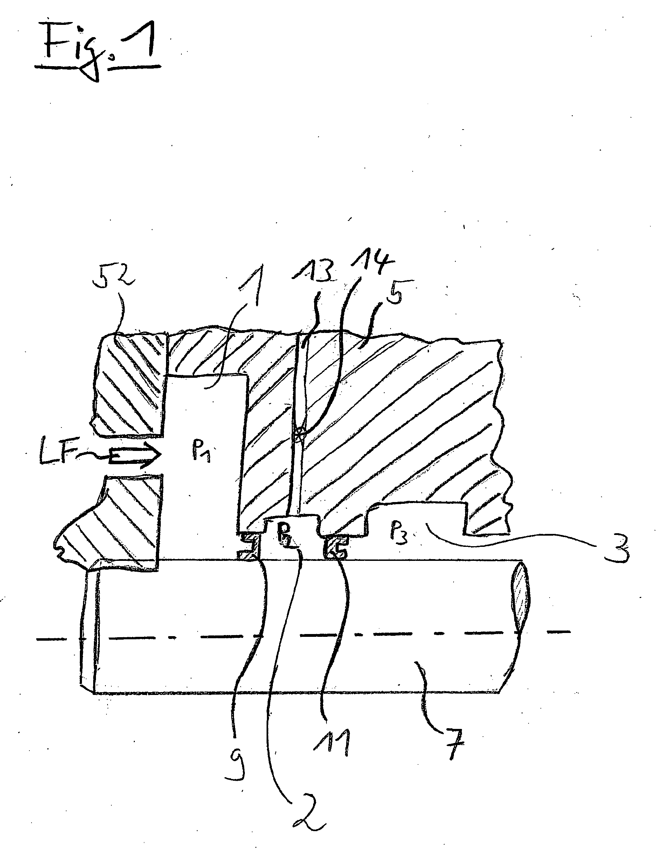

In Figur 1 ist eine erste bevorzugte Ausführungsform des erfindungsgemäßen Dichtungssystems dargestellt. Bevorzugt ist eine Rotoreinheit 5, drehbar um eine Statoreinheit 7, gelagert und an der im Bild linken Seite ist weiterhin eine Leckagequelle 52 sowohl mit der Rotoreinheit 5 als auch mit Statoreinheit 7 verbunden. Die Leckagequelle 52 ist bevorzugt zweiteilig ausgeführt, wobei der äußere Teil mit der Rotoreinheit 5 verbunden ist und der innere mit der Statoreinheit 7. Zwischen diesen beiden, drehbar zueinander gelagerten Teilen ist ein Spalt dargestellt, durch welchen eine Leckageflüssigkeit LF in den, an der in der Figur linken Seite der Rotoreinheit 5 eingefügten Druckraum 1 einfließt. Der Druckraum 1 ist in der in Figur 1 dargestellten, bevorzugten Ausführungsform eine in die Rotoreinheit 5 an deren linker Seite eingebrachte Mulde, welche durch die Leckagequelle 52, die Rotoreinheit 5 und die Statoreinheit 7 begrenzt wird. Aufgrund der Tatsache, dass die Rotoreinheit 5 und die Statoreinheit 7 nicht fest miteinander verbunden sind (Stoff- oder Formschluss), verbleibt zwischen diesen beiden Einheiten ein weiterer Spalt, durch welchen Leckageflüssigkeit LF den Druckraum 1 nach rechts hin verlassen kann. Dieser Spalt wird mit der Hochdruckdichtung 9 abgedichtet. In einer bevorzugten Ausführungsform ist diese Hochdruckdichtung 9 direkt zwischen Rotoreinheit 5 und Statoreinheit 7 angeordnet, wobei sie mit der Rotoreinheit 5 fest verbunden ist und auf der Statoreinheit 7 aufliegt. In einer weiteren bevorzugten Ausführungsform ist auch denkbar, dass der Druckraum 1 nach unten hin nicht von der Statoreinheit 7 begrenzt wird, sondern dass die Rotoreinheit 5 über einen Materialsteg verfügt, der nach links hin bis an die Leckagequelle 52 hin reicht, sodass der Druckraum 1 an drei seiner Seiten von der Rotoreinheit 5 begrenzt wird und mit seiner vierten Seite an die Leckagequelle 52 grenzt. Die Hochdruckdichtung 9 ist dann dementsprechend zwischen der Leckagequelle 52 und der Rotoreinheit 5 angeordnet. Vom Druckraum 1 aus gesehen hinter der Hochdruckdichtung 9 ist ein Sekundärraum 2 angeordnet. Dieser dient bevorzugt, wie auch der Druckraum 1, dem Sammeln eventuell auftretender Leckageflüssigkeit LF. Er wird nach oben hin begrenzt von der Rotoreinheit 5, nach unten von der Statoreinheit 7, zu seiner in der Figur linken Seite von der Hochdruckdichtung 9 und an seiner in der Figur rechten Seite von der Lagerdichtung 11. Die Lagerdichtung 11 wiederum grenzt den Sekundärraum 2 vom Lagerbereich 3 ab. Ihre primäre Aufgabe bei Nichtvorliegen einer Leckage besteht darin, das Austreten von Schmierstoffen aus dem Lagerbereich 3 in den Sekundärraum 2 zu verhindern. Ihre Fähigkeit, das Fließen von Leckageflüssigkeit aus dem Sekundärraum 2 in den Lagerbereich 3 zu verhindern, ist dabei geringer als die Fähigkeit der Hochdruckdichtung 9 Leckageflüssigkeit in dieser Richtung am Durchtreten zu hindern. Weiterhin in Fig. 1 dargestellt sind die Drücke p₁, p₂ und p₃, wobei p₁ der Druck im Druckraum 1, p₂ der Druck im Sekundärraum 2 und p₃ der Druck im Lagerbereich 3 ist. Im sogenannten belasteten Zustand, also bei Vorliegen einer Leckage an der Leckagequelle 52, wird der Druck p₁ im Vergleich zum Druck p₂ größer sein und der Druck p₂ seinerseits im Vergleich zu dem Druck p₃ größer sein. Dieses Druckgefälle von p₁ zu p₂ bzw. p₂ zu p₃ ist das zweckmäßig hergestellte Druckgefälle, welches dazu dient zu verhindern, dass die Leckageflüssigkeit von der Leckagequelle 52 bis hin zum Lagerbereich 3 gelangt. Im unbelasteten Zustand, also bei Normalbetrieb ohne Vorliegen einer Leckage wird der Druck p₃ im Lagerbereich 3 im Vergleich zu p₂ und p₁ groß sein und die Lagerdichtung 11 die einzige der eingezeichneten Dichtungen sein, die einem Druckgefälle standhalten muss. Die Abmessung des Druckraumes 1 und des Sekundärraumes 2 sind so gewählt, dass bei Auftreten einer Leckage genügend Leckageflüssigkeit LF aufgenommen werden kann, um für eine begrenzte Zeit einen sicheren Betrieb und ein Heraustreten der Leckageflüssigkeit LF aus der Rotoreinheit 5 bzw. Eintreten der Leckageflüssigkeit LF in dem Lagerbereich 3 gewährleistet ist. Bevorzugt soll im Druckraum 1 und Sekundärraum 2 so viel Leckageflüssigkeit LF aufgenommen werden können, dass der Leckagestrom aus der Leckagequelle 52 vollständig versiegt. Dies kann einerseits auftreten, wenn die gesamte oder der Großteil der Flüssigkeit aus der Leckagequelle 52 im Druckraum 1 und/oder Sekundärraum aufgenommen ist oder wenn der Gegendruck im Druckraum 1 so hoch ist, dass der Leckagestrom der Leckagequelle 52 zum Erliegen kommt. In der in Fig. 1 gezeigten, bevorzugten Ausführungsform grenzt an den Sekundärraum 2 ein Überdruckauslass 13, durch welchen im Sekundärraum 2 befindliche Leckageflüssigkeit LF entweichen kann und die Rotoreinheit 5 nach außen hin verlässt. Der Überdruckauslass 13 ist eine Sicherheitsvorrichtung, die verhindern soll, dass bei zu hohem Druck im Sekundärraum 2 Leckageflüssigkeit LF an der Lagerdichtung 11 vorbei in den Lagerbereich 3 gelangt. Stattdessen verlässt die Leckageflüssigkeit LF den Sekundärraum über den Überdruckauslass 13. Der Überdruckauslass 13 weist bevorzugt ein Überdruckventil 14 auf, an welchem der Druck einstellbar ist, bei dessen Erreichen sich das Überdruckventil 14 öffnet und Leckageflüssigkeit LF durch den Überdruckauslass 13 entweichen kann. In der Figur nicht gezeigt sind die weiteren bevorzugten Ausführungsformen, bei denen der Überdruckauslass 13, alternativ oder zusätzlich an den Druckraum 1 grenzt. Es lässt sich somit mit den Instrumenten Hochdruckdichtung 9, Lagerdichtung 11, Überdruckauslass 13 an den Druckraum 1 angrenzend, und Überdruckauslass 13, an den Sekundärraum angrenzend, ein kaskadisches Druckverhältnis von Leckagequelle 52 bis hin zum Lagerbereich 3 einstellen. Bevorzugt verbleiben die Überdruckventile 14 im laufenden Betrieb einstellbar, so dass im zusammengebauten Zustand der Radlageraufhängung - wenn Hochdruckdichtung 9 und Lagerdichtung 11 bereits verbaut sind und an diesen keine Änderungen mehr vorgenommen werden können - die Möglichkeit besteht, mittels der Überdruckventile 14 das kaskadische Druckverhältnis an geänderte Betriebsbedingungen und/oder Änderung der Sicherheitsanforderungen anzupassen. In der Figur ebenfalls nicht gezeigt sind weitere bevorzugte Ausführungsformen mit einer Vielzahl von Hochdruckdichtungen 9 und weiteren dazwischen liegenden Sekundärräumen 2. Es ergibt sich auf diese Weise die Möglichkeit, durch eine mehrstufige Abdichtung des Druckraums 1 gegenüber des Lagerbereiches 3, eine äußerst hohe Sicherheit gegen das Eintreten von Leckageflüssigkeit LF in den Lagerbereich 3 zu erreichen. Sämtliche auf Figur 1 basierende Merkmale sind unabhängig davon, ob die Rotoreinheit 5, der rotierende Teil und die Statoreinheit 7, der feststehende und am Fahrzeug befestigte Teil ist oder ob andersherum die Rotoreinheit 5 an der Fahrzeugkonstruktion befestigt ist und die Statoreinheit 7 im Vergleich zur Rotoreinheit 5 rotiert.

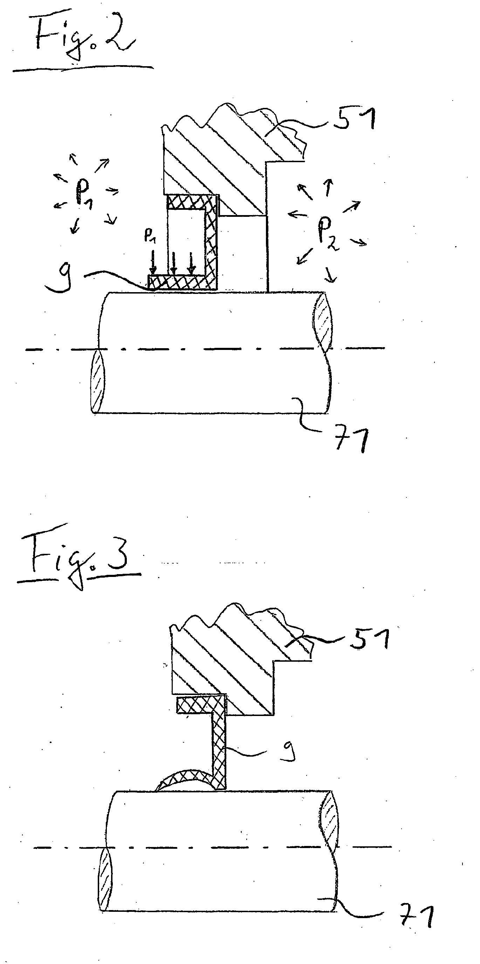

In Figur 2 ist eine bevorzugte Ausführungsform der Hochdruckdichtung 9 dargestellt. Die Hochdruckdichtung 9 ist dabei zwischen der Nabe 51 und der Achse 71 angeordnet, wobei an der Nabe 51 ein Vorsprung vorgesehen ist, an welchem die Hochdruckdichtung 9 angelagert ist. Nicht in der Figur gezeigt ist der Druckraum 1, der sich in der Figur an der linken Seite der Hochdruckdichtung 9 befindet und der Sekundärraum 2, der sich in der Figur an der rechten Seite der Hochdruckdichtung 9 befindet. Bevorzugt ist im Belastungszustand der Druck p₁ auf der linken Seite der Hochdruckdichtung 9 größer als der Druck p₂ auf der rechten Seite der Hochdruckdichtung 9. Aufgrund dieser Druckdifferenz wird die Hochdruckdichtung 9 gegen den Vorsprung, der an Nabe 51 vorgesehen ist, gepresst und es wird, da sich die Hochdruckdichtung 9 relativ zur Nabe 51 nicht bewegt zwischen Hochdruckdichtung 9 und Nabe 51 ein Formschluss hergestellt. Weiterhin wird aufgrund des hohen Druckes p₁ die untere Lippe der Hochdruckdichtung 9, welche auf der Achse 71 aufliegt, gegen die Achse 71 gedrückt. Mit steigendem Druckverhältnis p₁ zu p₂ steigt somit die Anpresskraft dieser Lippe auf die Achse 71 und ebenfalls die Dichtheit zwischen Druckraum 1 und Sekundärraum 2. Bevorzugt wird ein gummiartiger Werkstoff oder ein ähnliches Elastomer als Herstellungsmaterial für die Hochdruckdichtung verwendet, wobei besonders bevorzugt auch eine metallische Armierung vorgesehen sein kann.

In Figur 3 ist eine besonders bevorzugte Ausführungsform der Hochdruckdichtung 9 dargestellt. Dabei ist die untere Lippe in Form eines gewölbten Abschnitts ausgebildet. Vorteilhaft wirkt sich dabei aus, dass im unbelasteten Zustand, also ohne dass ein Druckverhältnis p₁ zu p₂ > 1 vorliegt und die untere Lippe wenig Berührungsfläche mit der Achse 71 aufweist und somit der Reibungswiderstand der Hochdruckdichtung an der Achse 71 und auf diese Weise der gesamte Gesamtreibungswiderstand der Radlagerkonstruktion deutlich verringert werden kann. Tritt im weiteren Verlauf eine Leckage auf und steigt der Druck p₁ gegenüber dem Druck p₂, so wird die untere Lippe der Hochdruckdichtung wie in Figur 2 gezeigt gegen die Achse 71 gepresst und aufgrund der Mechanismen, welche bereits in

Fig. 2 diskutiert wurden, wird bei höherem Druckverhältnis p₁ zu p₂ eine höhere Dichtheit erreicht.

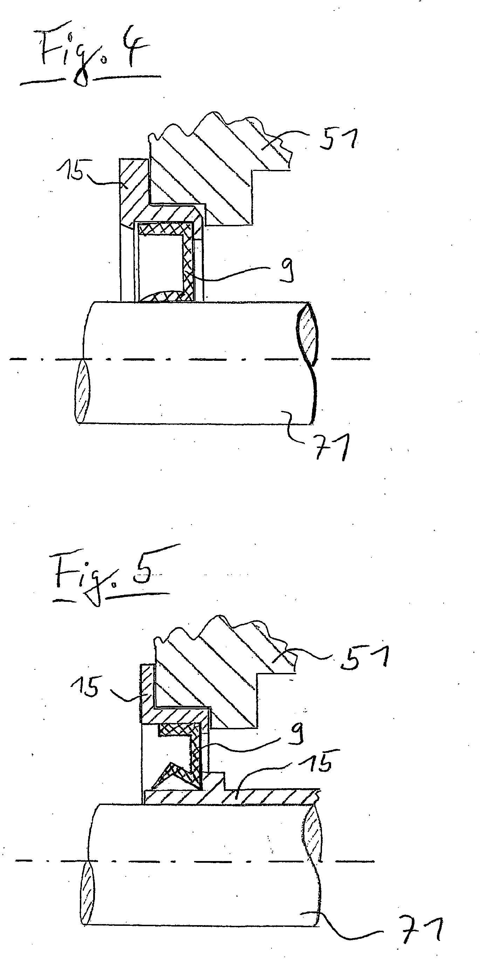

Figur 4 zeigt eine besonders bevorzugte Ausführungsform der Hochdruckdichtung, wobei die Hochdruckdichtung 9 nicht direkt an der Nabe 51, sondern an einem Adapterelement 15 anliegt. Mithilfe des Adapterelements 15 kann die Hochdruckdichtung 9 unabhängig von der Geometrie der Nabe 51 eingebaut werden. Das Adapterelement 15 wird bevorzugt mittels form- oder kraftschlüssiger Verbindung an der Nabe 51 befestigt, wobei darauf geachtet werden muss, dass zwischen Adapterelement 15 und Nabe 51 keine Leckageflüssigkeit LF hindurchtreten kann. Nicht in der Figur gezeigt ist eine weitere bevorzugte Ausführungsform, wobei zwischen Adapterelement 15 und Nabe 51 ein O-Ring aus elastischem Material oder eine ähnlich geartete statische Dichtung, d. h. Dichtung zwischen zwei sich nicht relativ zueinander bewegenden Teilen vorgesehen ist. Es ist vorteilhaft, wenn das Adapterelement 15 über Ausformungen verfügt, welche es ermöglichen, die Hochdruckdichtung in das Adapterelement 15 einzusetzen und in dieser Einbauposition zu fixieren. Dazu verfügt das Adapterelement 15 bevorzugt über eine Nase, in der Figur auf seiner linken Seite, gezeigt, an welcher vorbei die Hochdruckdichtung eingeführt werden kann und dann in eingebaute Stellung einrastet. Es ist auch denkbar, Hochdruckdichtung und Adapterelement 15 bereits in einem vorausgehenden Montageschritt zusammenzufügen und anschließend gemeinsam zwischen Nabe 51 und Achse 71 anzuordnen. Bevorzugt ermöglicht der Einsatz eines oder mehrere Adapterelement 15 die Verwendung normierter Dichtelemente, wie z. B. profilierte Dichtringe nach Norm.

Figur 5 zeigt eine besonders bevorzugte Ausführungsform der Hochdruckdichtung, wobei diese zwischen zwei Adapterelementen 15 angeordnet ist. Es ist dabei das untere Adapterelement 15 gegen Verlagerung relativ zur Achse 71 gesichert und das obere Adapterelement 15 gegen Verlagerung relativ zur Nabe 51 gesichert vorgesehen. Die Hochdruckdichtung 9 weist eine weitere bevorzugte Ausführungsform auf, wobei die untere Lippe hier im unbelasteten Zustand gezeigt ist, wobei die Berührungsfläche zwischen dem unteren Adapterelement 15 und der Hochdruckdichtung 9 entsprechend gering ist, so dass ein geringer Reibungswiderstand auftritt. Bevorzugt kann die Oberflächenqualität des unteren Adapterelements 15 im Bereich, in dem es an der Hochdruckdichtung 9 reibt mit besonders hoher Güte vorgesehen sein, so dass ein nicht nur von der Hochdruckdichtung 9 ausgehend geringer Reibungswiderstand zu erwarten ist, sondern auch die Oberflächengüte des Adapterelements 15 ein leichtes Gleiten der Hochdruckdichtung 9 auf dem unteren Adapterelement 15 erlaubt. Die beiden Adapterelemente 15 weisen jeweils auf ihrer rechten Seite einen Vorsprung auf, der als Anschlag für die Hochdruckdichtung dient. Die Hochdruckdichtung ist somit bei Anliegen eines Druckverhältnisses p₁ zu p₂ > 1 gegen Verlagerung hin zum niedrigeren Druck, also in der Figur rechts, gesichert. In weiteren bevorzugten Ausführungsformen, welche nicht in den Figuren gezeigt sind, können mehrere Adapterelemente 15 kumulativ sowohl auf der Nabenseite als auch auf der Achsenseite angeordnet sein.

### Bezugszeichenliste

- 1: Druckraum
- 2: Sekundärraum
- 3: Lagerbereich
- 5: Rotoreinheit
- 7: Statoreinheit
- 9: Hochdruckdichtung
- 11: Lagerdichtung
- 13: Überdruckauslass
- 14: Überdruckventil
- 15: Adapterelement
- 51: Nabe
- 52: Leckagequelle
- 71: Achse
- p: Druck
- LF: Leckageflüssigkeit

## Patentansprüche

1. Dichtungssystem, insbesondere Dichtungssystem für Radlageranordnungen von Nutzfahrzeugen,
umfassend eine Rotoreinheit (5) und eine Statoreinheit (7), die in einem Lagerbereich (3) drehbar zueinander gelagert sind,
wobei die Rotoreinheit (5) eine Nabe (51) und die Statoreinheit (7) eine Achse (71) aufweist,
wobei an die Rotoreinheit (5) und die Statoreinheit (7) eine Leckagequelle (52) grenzt,
wobei zwischen Leckagequelle und Rotor- und/oder Statoreinheit (5, 7) ein Druckraum (1) vorgesehen ist, und
wobei der Druckraum (1) in Richtung des Lagerbereiches (3) mittels einer Hochdruckdichtung (9) abgedichtet ist,
**dadurch gekennzeichnet, dass** der Lagerbereich (3) gegen den Druckraum (1) durch eine Lagerdichtung (11) abgedichtet ist,
wobei zwischen Hochdruckdichtung (9) und Lagerdichtung (11) ein Sekundärraum (2) eingeschlossen ist.

2. Dichtungssystem nach Anspruch 1,
wobei die Hochdruckdichtung (9) gesichert gegen Verlagerung relativ zu der Rotoreinheit (5) und spielfrei an der Statoreinheit (7) angeordnet ist.

3. Dichtungssystem nach einem der vorhergehenden Ansprüche,
wobei die Hochdruckdichtung (9) derart ausgebildet ist, dass sie im unbelasteten Zustand einen geringeren Anpressdruck auf die, sich relativ zu ihr bewegende Statoreinheit (7) ausübt als im belasteten Zustand.

4. Dichtungssystem nach einem der vorhergehenden Ansprüche,
wobei die Hochdruckdichtung (9) und die Lagerdichtung (11) ein kaskadisches Druckgefälle erzeugen, so dass der Druck p₁ im Druckraum (1) größer ist als der Druck p₂ im Sekundärraum (2) und dieser größer ist als der Druck p₃ im Lagerbereich (3),
wobei das Druckgefälle Δp_{HD} = p₁ - p₂ über die Huchdruckdichtung (9) so groß sein muss, dass das Druckgefälle über die Lagerdichtung (11) den Grenzwert für deren Dichtheit Δp_{LD} = p₂ - p₃ nicht überschreitet.

5. Dichtungssystem nach einem der vorhergehenden Ansprüche,
wobei die Leckagequelle (52) ein sowohl mit der Rotoreinheit (5) als auch mit der Statoreinheit (7) verbundener hydrostatischer Antrieb ist und
wobei das Leckagefluid aus diesem austretendes Hydrauliköl ist.

6. Dichtungssystem nach einem der vorhergehenden Ansprüche,
wobei an Nabe (51) und/oder Achse (71) ein Adapterelement (15) vorgesehen ist, an welchem die Hochdruckdichtung (9) angelagert ist,
wobei die Abmessungen des Adapterelements (15) derart festgelegt ist, dass die Dichtungen (9, 11) unabhängig von der Geometrie der Achse (71) und der Nabe (51) auswählbar sind, und
wobei das Adapterelement (15) an der Nabe (51) oder der Achse (71), oder je ein Adapterelement (15) an Nabe (51) und Achse (71) mittels einer form-, stoff- und/oder kraftschlüssigen Verbindung angelagert ist.

7. Dichtungssystem nach einem der vorhergehenden Ansprüche,
wobei die Rotoreinheit (5) einen Überdruckauslass (13) aufweist, der vorzugsweise ein Überdruckventil (14) umfasst.

8. Dichtungssystem nach Anspruch 7,
wobei der Überdruckauslass (13) an den Druckraum (1) und/oder an den Sekundärraum (2) grenzt.

9. Dichtungssystem nach einem der Ansprüche 7 oder 8,
wobei das Überduckventil (14) bei einem Grenzdruck öffnet, welcher dem maximal erlaubten Betriebsdruck der stromab folgenden Dichtung (9, 11) angepasst ist.

10. Dichtungssystem nach einem der Ansprüche 7 bis 9,
wobei der Druckraum (1) und/oder der Sekundärraum (2) und/oder der Überdruckauslass (13) mit einer Vorrichtung verbunden ist, welche austretende Leckageflüssigkeit von der Außenseite der Rotoreinheit (5) her sichtbar macht.

## Claims

1. A sealing system, in particular a sealing system for wheel bearing arrangements of utility vehicles,
comprising a rotor unit (5) and a stator unit (7), which are mounted or supported in a bearing area in such a way that they are rotatable relative to each other,
wherein the rotor unit (5) has a hub (51) and the stator unit (7) has an axle (71),
wherein a leakage source (52) is adjacent to the rotor unit (5) and the stator unit (7),
wherein between the leakage source and the rotor and/or stator unit (5, 7) there is provided a pressure chamber (1), and
wherein the pressure chamber (1) is sealed in the direction of the bearing area (3) by means of a high pressure seal (9),
**characterized in that** the bearing area (3) is sealed against the pressure chamber (1) by means of a bearing seal (11),
wherein a secondary chamber (2) is enclosed between the high pressure seal (9) and the bearing seal (11).

2. The sealing system of claim 1,
wherein the high pressure seal (9) is arranged such that it is secured against displacement relative to the rotor unit (5) and that it is arranged without clearance on the stator unit (7).

3. The sealing system of any one of the preceding claims,
wherein the high pressure seal (9) is designed such that in the unloaded state it exerts a lower contact pressure on the stator unit (7), which moves relative to the high pressure seal, than in the loaded state.

4. The sealing system of any one of the preceding claims,
wherein the high pressure seal (9) and the bearing seal (11) generate a cascading pressure difference or pressure gradient such that the pressure p₁ in the pressure chamber (1) is larger than the pressure p₂ in the secondary chamber (2) and the latter is larger than the pressure p₃ in the bearing area (3),
wherein the pressure difference Δp_{HD} = p₁-p₂ via the high pressure seal (9) has to be so large that the pressure difference via the bearing seal (11) will not exceed the limit for the tightness Δp_{LD} = p₂-p₃ thereof.

5. The sealing system of any one of the preceding claims,
wherein the leakage source (52) is a hydrostatic drive connected both to the rotor unit (5) and to the stator unit (7), and
wherein the leakage fluid is a hydraulic oil exiting therefrom.

6. The sealing system of any one of the preceding claims,
wherein on the hub (51) and/or axle (71) there is provided an adapter element (15), to which the high pressure seal (9) is attached,
wherein the dimensions of the adapter element (15) are defined such that the seals (9, 11) may be chosen irrespective of the geometry of the axle (719 and of the hub (51), and
wherein the adapter element (15) is attached to the hub (51) or to the axle (71) or one adapter element (15) is attached to the hub (51) and one adapter element (15) is attached to the axle (71), respectively, by means of a form-fitting connection, a substance-to-substance or material connection and/or a force-fit connection.

7. The sealing system of any one of the preceding claims,
wherein the rotor unit (5) has a pressure relief outlet (13), which preferably comprises a pressure relief valve (14).

8. The sealing system of claim 7,
wherein the pressure relief outlet (13) is adjacent to the pressure chamber (1) and/or to the secondary chamber (2).

9. The sealing system of any one of claims 7 or 8,
wherein the pressure relief valve (14) opens upon a limit pressure, which is adapted to the maximum permissible operating pressure of the next seal (9, 11) downstream.

10. The sealing system of any one of claims 7 to 9,
wherein the pressure chamber (1) and/or the secondary chamber (2) and/or the pressure relief outlet (13) are connected to a device, which makes visible exiting leakage liquid from the outside of the rotor unit (5).

## Revendications

1. Système d'étanchement, en particulier système d'étanchement pour des agencements de paliers de roues de véhicules utilitaires,
comprenant une unité rotor (5) et une unité stator (7) qui sont montées avec faculté de rotation l'une par rapport à l'autre dans une zone de palier (3),
dans lequel l'unité rotor (5) comprend un moyeu (51) et l'unité stator (7) comprend un axe (71),
dans lequel une source de fuite (52) est adjacente à l'unité rotor (5) et à l'unité stator (7),
dans lequel il est prévu une chambre à pression (1) entre la source de fuite et l'unité rotor et/ou l'unité stator (5, 7), et
dans lequel la chambre à pression (1) est étanchée en direction de la zone de palier (3) au moyen d'un joint à haute pression (9),
**caractérisé en ce que** la zone de palier (3) est étanchée vis-à-vis de la chambre à pression (1) par un joint de palier (11),
et **en ce qu'**une chambre secondaire (2) est enfermée entre le joint à haute pression (9) et le joint de palier (11).

2. Système d'étanchement selon la revendication 1,
dans lequel le joint à haute pression (9) est agencé de manière bloquée à l'encontre d'un déplacement par rapport à l'unité rotor (5) et sans jeu sur l'unité stator (7).

3. Système d'étanchement selon l'une des revendications précédentes,
dans lequel le joint à haute pression (9) est réalisé de telle façon que dans l'état non sollicité il exerce sur l'unité stator (7) qui se déplace par rapport à lui-même une pression plus faible que dans l'état sollicité.

4. Système d'étanchement selon l'une des revendications précédentes,
dans lequel le joint à haute pression (9) et le joint de palier (11) produisent un gradient de pression en cascade, de sorte que la pression p₁ dans la chambre à pression (1) est plus forte que la pression p₂ dans la chambre secondaire (2) et que celle-ci est plus forte que la pression p₃ dans la zone de palier (3),
et le gradient de pression Δp_{HD} = p₁ - p₂ de part et d'autre du joint à haute pression (9) doit être aussi élevé que le gradient de pression de part et d'autre du joint de palier (11) ne dépasse pas la valeur limite pour son étanchéité Δp_{LD} = p₂ -p₃.

5. Système d'étanchement selon l'une des revendications précédentes,
dans lequel la source de fuite (52) est un entraînement hydrostatique relié aussi bien à l'unité rotor (5) qu'à l'unité stator (7), et dans lequel le fluide en fuite est une huile hydraulique sortant de cet entraînement.

6. Système d'étanchement selon l'une des revendications précédentes,
dans lequel il est prévu un élément adaptateur (15) sur le moyeu (51) et/ou sur l'axe (71), élément adaptateur sur lequel est rapporté le joint à haute pression (9),
dans lequel les dimensions de l'élément adaptateur (15) sont fixées de telle manière que les joints (9, 11) peuvent être choisis indépendamment de la géométrie de l'axe (71) et du moyeu (51), et
dans lequel l'élément adaptateur (15) est rapporté sur le moyeu (51) ou sur l'axe (71), ou bien un élément adaptateur (15) respectif est monté sur le moyeu (51) et sur l'axe (71) au moyen d'une liaison à coopération de formes, à coopération de matières et/ou à coopération de forces.

7. Système d'étanchement selon l'une des revendications précédentes,
dans lequel l'unité rotor (5) comporte un échappement de surpression (13), qui inclut de préférence une valve à surpression (14).

8. Système d'étanchement selon la revendication 7,
dans lequel l'échappement de surpression (13) est adjacent à la chambre à pression (1) et/ou à la chambre secondaire (2).

9. Système d'étanchement selon l'une des revendications 7 8,
dans lequel la valve à surpression (14) s'ouvre à une pression limite qui est adaptée à la pression de service autorisée maximum du joint (9, 11) qui suit en aval.

10. Système d'étanchement selon l'une des revendications 7 à 9,
dans lequel la chambre à pression (1) et/ou la chambre secondaire (2) et/ou l'échappement de surpression (13) est relié(e) à un dispositif qui rend visible le liquide en fuite depuis le côté extérieur de l'unité rotor (5).
